# EUROPÄISCHE PATENTSCHRIFT

(11) **EP 1 585 616 B1**
(45) Veröffentlichungstag und Bekanntmachung des Hinweises auf die Patenterteilung: **11.10.2006**
(21) Anmeldenummer: 03779698.4
(22) Anmeldetag: 18.11.2003
(51) Int. Cl.: B23Q 1/34, B23Q 1/28, B25B 5/06, F16D 65/14, F16D 49/00, F16D 63/00

(54) **KLEMM-UND/ODER BREMSVORRICHTUNG**
CLAMPING AND/OR BRAKE DEVICE
DISPOSITIF DE SERRAGE ET/OU DE FREINAGE

(30) Priorität: 20.01.2003 DE 10302225; 05.05.2003 DE 20306924 U
(43) Veröffentlichungstag der Anmeldung: 19.10.2005
(73) Patentinhaber: Hofmann, Klaus, 85567 Pienzenau (DE)
(72) Erfinder: Hofmann, Klaus, 85567 Pienzenau (DE)
(74) Vertreter: Eder, Eugen
(86) Internationale Anmeldenummer: PCT/DE2003/003802
(87) Internationale Veröffentlichungsnummer: WO 2004/067222

(56) Entgegenhaltungen:
- WO-A-01/34990
- US-A- 3 663 027
- US-A- 4 543 877

## Beschreibung

Die Erfindung betrifft eine Klemm- und/oder Bremsvorrichtung mit den Merkmalen des Oberbegriffs des Schutzanspruchs 1.

Klemm- oder Bremsvorrichtungen sind in den verschiedensten Ausführungsformen für die verschiedensten Anwendungsfälle bekannt. So ist in der EP-A-0 936 366 eine Bremsvorrichtung für eine Linearführung bekannt, welche einen Tragkörper aufweist, der längs einer Führungsschiene verfahrbar ist. Der Tragkörper weist Bremsbacken auf, die auf die beiden Längsseiten einwirken. Der Tragkörper ist H-förmig ausgebildet und weist einen dünnen elastisch biegsamen Steg und zwei untere Schenkel auf, mit welchen er die Führungsschiene umgreift. Zwischen jeweils einem unteren Schenkel und der Führungsschiene ist eine Bremsbacke angeordnet. Der Tragkörper ist mit zwei oberen Schenkeln versehen, die gemeinsam mit dem Steg einen Aufnahmeraum bilden, in welchem ein auf die oberen Schenkel einwirkendes krafterzeugendes Mittel vorgesehen ist. Hierbei kann es sich um eine hydraulisch oder pneumatisch betätigbare Kniehebelmechanik oder einen Piezoaktuator handeln. Des Weiteren kann als Kraftwandler ein hydraulisch oder pneumatisch betätigbarer Keilschieber vorgesehen sein, der in einem hierzu sich in Längsrichtung der Bremsvorrichtung verjüngend ausgebildeten Raum zwischen den oberen Schenkeln des Tragkörpers geführt ist. In allen Fällen erfolgt durch die Kraftbeaufschlagung der beiden oberen Schenkel ein Biegen des elastischen Stegs, so dass die beiden unteren Schenkel mit den Bremsbacken nach innen bewegt werden bzw. die Führungsschiene mit einer größeren Kraft beaufschlagen.

Nachteilig bei dieser bekannten Bremsvorrichtung in Verbindung mit dem Einsatz eines elektromechanischer Wandlers, beispielsweise eines Piezoelements, ist insbesondere dessen Empfindlichkeit gegenüber Erschütterungen oder anderweitige mechanische Belastungen.

Der Einsatz einer Kniehebelmechanik oder eines Keilschiebers bedeutet ebenso wie ein elektromechanischer Wandler einen hohen Montage- bzw. Herstellungsaufwand.

Zudem besteht insbesondere bei Klemmvorrichtungen die Forderung nach ausreichend hohen Klemmkräften, die sich bei bekannten Vorrichtungen nur mit einem relativ hohen konstruktiven und damit finanziellen Aufwand realisieren lassen.

Aus der US 5,855,446 ist eine hydraulische Klemmbuchse bekannt, welche an einer Welle ausgerichtet und mit ihr bspw. drehfest verbunden werden kann. Die Buchse weist einen im wesentlichen stabilen Buchsenkörper auf, der in einem Abstand um eine Antriebswelle angeordnet ist. An diesen Buchsenkörper angrenzend und der Welle zugewandt ist eine mit Druck beaufschlagbare Kammer vorgesehen. Eine sich im wesentlichen parallel zur Welle erstreckende Seitenwand dieser Kammer dient hier gleichzeitig als Bremselement, welches bei Druckbeaufschlagung der Kammer durch die Expansion der Kammer gegen die Welle gedrückt wird, um so eine reibschlüssige Verbindung herzustellen. Durch eine Σ-förmige Ausbildung der seitlich angrenzenden Wände der Kammer soll verhindert werden, daß sich die Buchse bei Druckbeaufschlagung der Kammer schief zur Welle ausrichtet. Die Σ-förmigen Seitenwände der Kammer ermöglichen im Beaufschlagungsfall eine Ausdehnung dieser Seitenwände in radialer Richtung auf die Welle zu, noch bevor der zunehmende Kammerdruck auch die parallel zur Welle verlaufende Kammerwand gegen die Welle presst. So kann sich die Buchse rechtwinklig zur Wellenachse ausrichten, bevor die drehfeste Verbindung erzeugt wird.

Diese Klemmvorrichtung weist keine günstige Kräfteübersetzung für die Erzeugung hoher Anpresskräfte auf. Ferner ist die Kammer in ihrer Gestalt und insbesondere in Ihrer Anordnungsmöglichkeit relativ zum Buchsenkörper eingeschränkt. Bremswirkung kann hier nur durch Beaufschlagung mit Überdruck erzielt werden, und das eigentliche Bremselement, welches gegebenenfalls hohe Antriebskräfte übertragen muss, ist nicht fest mit dem Buchsenkörper verbunden, sondern nur über die erzwungenerweise relativ instabile Druckkammer.

Aus der WO 01/34990 A1 der Anmelderin ist eine Klemm- und/oder Bremsvorrichtung bekannt, bei der an einem Grundkörper eine mit Druck beaufschlagbare Kammer vorgesehen ist, die zumindest in einem Teilbereich von wenigstens einer biegbaren aber zug- und/oder druckfesten Wandung begrenzt ist. Die der Wandung gegenüberliegende Begrenzung der Kammer kann ebenfalls wie die erste Wandung ausgeführt sein. Sie kann aber auch starrer Teil eines Körpers sein. Bevorzugt liegen die Wandungen in einem verhältnismäßig geringem Abstand. Die aus der Verformung der Kammer resultierenden Kräfte werden mindestens zum Teil in Richtung bzw. entlang der Wandung geleitet und im Bereich der Verbindung der Wandung mit einem Grundkörper in diesen eingeleitet. Wählt man den Angriffspunkt solcher Kräfte an dem Grundkörper geeignet aus, und ist dieser Grundkörper wenigstens teilweise elastisch verformbar, so können die Kräfte über diesen Grundkörper an andere Stellen des Grundkörpers, bspw. in Klemm- oder Bremsbereiche übertragen werden. Ein entsprechendes Brems- oder Klemmmittel in diesen Bereichen kann dann mittels der Kräfte in eine Beaufschlagungsposition hinein oder aus dieser heraus bewegt werden, um ein Führungselement oder ein zu klemmendes oder zu bremsendes Element zu bremsen oder freizugeben. Dabei kann sowohl aufgebrachter Über- als auch Unterdruck in der Kammer genutzt werden, um sowohl Zug- als auch Druckkräfte in den Grundkörper einzuleiten. Selbstverständlich können die Klemm- und/ oder Bremsbereiche vor und nach der Krafteinleitung noch in Eingriff mit dem Führungselement oder dem zu klemmenden oder zu bremsenden Element stehen, wobei sich jedoch Änderungen der Beaufschlagungskräfte zwischen den Klemm- und/oder Bremsbereichen und dem jeweils anderen Element ergeben.

Diese bekannte Klemm- und/oder Bremsvorrichtung geht von der Erkenntnis aus, dass eine geeignete Kammer bei Beaufschlagung mit Unter- oder Überdruck eine Verformung anstrebt. Wird diese Kammer zu einem großen Teil von wenigstens einer annähemd ebenen Wandung gebildet, so verursacht Über- oder Unterdruck in der Kammer zunächst eine Verformung in eine erste Richtung, welche im wesentlichen senkrecht zu dieser Wandung verläuft. Um der Verformung (Expansion oder Kontraktion) in dieser ersten Richtung nachzugeben resultiert daraus entsprechend umgekehrt eine Kontraktion oder Expansion der Kammer in eine im allgemeinen senkrecht zur ersten Richtung (also im wesentlichen parallel zu der Wandung) verlaufende zweite Richtung. Dabei wird die Tatsache genutzt, dass geringe Kräfte bzw. Verformungen in der ersten Richtung große Kräfte in der zweiten Richtung erzeugen, die zum Bremsen bzw. Klemmen oder zum Lösen vorgespannter Klemm- bzw. Bremsvorrichtungen genutzt werden können.

Schließlich ist aus der DE 28 48 651 A1 eine kontraktile Zelle bekannt, welche in verschiedensten Ausführungsformen die Erzeugung eines linearen Bewegungswegs mit einer entsprechenden Zugkraft ermöglicht. Die kontraktile Zelle kann in einer Ausführungsform auch zwei federnde Platten, beispielsweise Stahlplatten, umfassen, wobei zwischen den Platten ein Druckraum definiert ist, der beispielsweise mittels eines Balgs abgedichtet sein kann. Durch die Beaufschlagung des Balgs mit Druckluft werden die federnden Stahlplatten gebogen, so dass sich die unteren Enden der beiden Stahlplatten in Richtung auf die jeweiligen oberen Enden zu bewegen. Diese Druckschrift beschreibt jedoch an keiner Stelle die Erzeugung von Brems- und/oder Klemmkräften mittels einer derartigen kontraktilen Zelle.

Ausgehend von dem eingangs genannten Stand der Technik liegt der Erfindung die Aufgabe zugrunde, eine Klemm- und/oder Bremsvorrichtung zu schaffen, welche mit geringerem konstruktiven Aufwand herstellbar ist und mit welcher auf einfache Weise ausreichend hohe Brems- bzw. Klemmkräfte erzeugt werden können.

Die Erfindung löst diese Aufgabe mit den Merkmalen des Patentanspruchs 1 bzw. 2.

Die Erfindung geht von der Erkenntnis aus, dass mittels zweier Wandungen, die zwischen einem Basiselement und einem Beaufschlagungselement angeordnet sind und diese Elemente verbinden, ein mit Druck beaufschlagbarer Raum definiert werden kann, wobei die beiden Wandungen jeweils einen Biegebereich aufweisen, der so zugfest und dennoch so elastisch biegbar ausgebildet ist, dass die Biegebereiche zwischen dem Basiselement und dem Beaufschlagungselement ein federndes Element bilden. Die beiden Wandungen und deren Biegebereiche sind so gestaltet, dass bei einer Druckbeaufschlagung des Druckraums mit Über- oder Unterdruck in Folge einer Änderung der Krümmung der Biegebereiche eine Änderung der durch das Beaufschlagungselement auf das Objekt übertragenen Klemm- und/oder Bremskräfte bewirkt wird oder eine Bewegung des Beaufschlagungselements in Richtung auf das Basiselement oder von diesem weg erfolgt. Das Basiselement und das Beaufschlagungselement müssen nicht zwingend mit den Wandungen verbunden sein. Vielmehr können die Wandungen das Basis- und das Beaufschlagungselement jeweils mit ihren Endbereichen beaufschlagen.

Bei diesen Ausführungsformen ist es, anders als bei der bekannten Vorrichtung der Anmelderin, möglich, Klemm- und/oder Bremskräfte zu erzeugen oder zu verändern, ohne dass hierzu ein im Wesentlichen starrer Körper deformiert werden müsste. Hierdurch ergibt sich neben einer einfachen Konstruktion eine geringe Baugröße.

Die Vorrichtung ist einfach herstellbar, da lediglich das Beaufschlagungselement über zwei Wandungen mit dem Basiselement verbunden werden muss. Selbstverständlich müssen die seitlichen Bereiche der Wandungen ebenfalls im Wesentlichen druckdicht abgeschlossen werden (eine geringe Leckage kann ggf. toleriert werden, z.B. wenn als Druckmedium Druckluft verwendet wird).

Anders als bei bekannten Klemmbüchsen, die relativ weiche Wandungen aufweisen, und die lediglich bei Beaufschlagung mittels Überdruck den Abstand zwischen Beaufschlagungselement und Basiselement vergrößern, kann die erfindungsgemäße Vorrichtung auch so ausgestaltet und eingesetzt werden, dass bei einer Beaufschlagung mit Druck (Überdruck oder Unterdruck) der Abstand zwischen Basiselement und Beaufschlagungselement reduziert wird. Mit der erfindungsgemäßen Vorrichtung ist es möglich, bereits im drucklosen Zustand bei einer entsprechenden Montage der Vorrichtung in einer Gesamtvorrichtung eine vorbestimmte Klemm- und/oder Bremskraft zu erzeugen, mit welcher das Beaufschlagungselement mit einem damit zusammenwirkendem Element beaufschlagt wird. Durch die Beaufschlagung mit Überdruck oder Unterdruck können die auf dieses Objekt übertragenen Kräfte erhöht, reduziert oder ganz aufgehoben werden.

Die Wandungen können dabei durch das Vorsehen einer entsprechenden Krümmung so ausgestaltet werden, dass jeweils bei Unterdruck oder Überdruck der Abstand zwischen Basiselement und Beaufschlagungselement vergrößert oder reduziert wird bzw. die erzeugten Kräfte vergrößert oder reduziert werden.

Nach einer Ausführungsform der Erfindung verlaufen die Biegebereiche der beiden Wandungen im drucklosen Zustand im Wesentlichen parallel und weisen vorzugsweise einen geringen Abstand auf, der beispielsweise im Bereich von 0,1 mm bis 10 mm, vorzugsweise von 1 mm bis 5 mm liegen kann.

Die Wandungen können im Ausgangszustand eine geringfügige Krümmung aufweisen, so dass die Biegebereiche eine Präferenzrichtung erhalten. Hierdurch wird bewirkt, dass bei einer Betätigung der durch die Wandungen gebildeten Feder die Biegebereiche der Wandungen in der gewünschten Richtung ausbiegen. Beispielsweise können die Biegebereiche im drucklosen Zustand gegenüber dem durch diese Wandungen definierten Druckraum leicht konvex nach außen gebogen sein. Wird die Klemm- und/oder Bremsvorrichtung derart in eine Gesamtvorrichtung eingebaut, dass im drucklosen Ausgangszustand bereits Kräfte auf das zu beaufschlagende Objekt übertragen werden, so werden die Biegebereiche der Wandungen in Folge der Kompression des durch sie gebildeten federnden Elements definiert weiter in der so vorgegebenen Richtung gebogen. Bei einer dann vorgenommenen Druckbeaufschlagung mit Überdruck erfolgt eine weitere Zunahme der Krümmung und ein Reduzieren bzw. vollständiges Aufheben der übertragenen Kräfte.

In gleicher Weise kann eine derart ausgebildete und montierte Vorrichtung selbstverständlich auch mit Unterdruck beaufschlagt werden, wobei die Krümmung der Biegebereiche weiter reduziert und damit die übertragbaren Kräfte erhöht werden. Der maximale Unterdruck ist dadurch vorgegeben, dass die Wandungen selbstverständlich nicht bis über die vollständige Parallelität hinaus aufeinander bewegt werden dürfen, da sonst ein Umspringen der Biegung von konvex nach außen auf konvex nach innen erfolgt. Die Krümmung im drucklosen Zustand kann jedoch auch als konvex nach innen, bezogen auf den Druckraum, vorgegeben sein. Das Verhalten dieser Vorrichtung bei Beaufschlagung mit Überdruck oder Unterdruck ergibt sich analog.

Soll, wie vorstehend ausgeführt, eine Zunahme der übertragbaren Kräfte bzw. ein Vergrößern des Abstands zwischen Beaufschlagungselement und Basiselement erfolgen, so muss bei derartigen Ausführungsformen im drucklosen Ausgangszustand die Krümmung der Wände bzw. der Biegebereiche selbstverständlich so gestaltet sein, dass diese bei Beaufschlagung mit Überdruck bzw. Unterdruck reduziert werden kann.

Um hohe Kräfte bereits im Ausgangszustand übertragen zu können, ist es vorteilhaft, die Biegebereiche der Wandungen so auszubilden, dass die Krümmungen mathematisch glatten Funktionen folgen und dementsprechend keine scharfen Knicke aufweisen.

Nach einer Ausführungsform der Erfindung können die Wandungen als separate Teile ausgebildet sein und einen Befestigungsbereich aufweisen, mit welchem die Wandungen vorzugsweise druckdicht mit dem Basiselement verbunden sind, oder die als separate Teile ausgebildeten Wandungen können in ihren Befestigungsbereichen so gestaltet sein, dass diese nach dem vorzugsweise druckdichten Verbinden miteinander das Basisteil bilden.

Die Wandungen können im Bereich des Basiselements jeweils einen rechtwinkelig abgewinkelten Befestigungsbereich aufweisen, wobei die Befestigungsbereiche vorzugsweise druckdicht mit einem im Wesentlichen quer zu den Biegebereichen verlaufenden Basiselement verbunden sind. Das Basiselement kann in diesem Fall als Montageplatte ausgebildet sein.

In gleicher Weise können die Wandungen als separate Teile ausgebildet sein und einen Befestigungsbereich aufweisen, mit welchem die Wandungen, vorzugsweise druckdicht, mit dem Beaufschlagungselement verbunden sind. Die Befestigungsbereiche können wiederum so gestaltet sein, dass sie nach dem vorzugsweise druckdichten Verbinden miteinander das Beaufschlagungselement bilden.

Nach einer Ausführungsform der Erfindung können die Seitenbereiche der Wandungen mittels stumpf daran anschließender seitlicher Dichtelement abgedichtet sein, die vorzugsweise aus Kunststoff oder Gummi bestehen können. Bei Krümmungsänderungen der Biegbereiche der Wandungen gleiten diese stumpf auf der betreffenden Oberfläche des Dichtelements. Bei einem entsprechendem Anpressdruck kann jedoch eine ausreichende Dichtigkeit erzielt werden.

Selbstverständlich können jedoch in den Seitenbereichen auch Dichtelemente zwischen den Wandungen vorgesehen, beispielsweise eingeklebt sein, wobei diese Dichtelemente derart flexibel ausgebildet sind, dass dies bei Krümmungsänderungen der Biegebereiche der Wandungen die Bewegungen der Wandungen mitmachen, ohne dass die dichtende Wirkung verloren geht.

Zwischen den als separate Teile ausgebildeten Wandungen können im Bereich des Basiselements und/oder des Beaufschlagungselements jeweils ein Abstands- und/oder Dichtelement eingesetzt sein. Dies ermöglicht zum einen die Abdichtung der betreffenden Kanten bzw. Seitenbereiche der Wandungen und zum anderen ein definiertes Volumen des zwischen den Wandungen im drucklosen Ausgangszustand gebildeten Druckraums.

Es ist jedoch ebenfalls möglich, die Wandungen in diesen Bereichen unmittelbar miteinander zu verbinden, ohne dass ein derartiges Element dazwischen gesetzt wäre. Das definierte Volumen im Ausgangszustand kann dann beispielsweise durch konvex nach außen gewölbte Biegebereiche der Wandungen definiert werden.

Nach einer Ausführungsform der Erfindung kann sich ausgehend vom Basiselement oder Beaufschlagungselement ein Haltearm für das betreffende seitliche Dichtelement in Richtung auf das jeweils andere Element (Beaufschlagungselement oder Basiselement) erstrecken, wobei das seitliche Dichtelement vorzugsweise zwischen den seitlichen Stirnflächen der Wandungen und dem Haltearm angeordnet ist. Das Dichtelement kann eine bestimmte Flexibilität aufweisen und der Abstand zwischen den seitlichen Stirnwandungen und dem Haltearm kann so bemessen sein, dass das Dichtelement mit einer vorbestimmten Anpresskraft gegen die seitlichen Stirnflächen gedrückt wird.

Nach einer Ausführungsform der Erfindung kann der Bewegungsweg der Biegebewegung der Biegebereiche der Wandungen bei Druckbeaufschlagung durch einen mechanischen Anschlag begrenzt sein, wobei der Anschlag vorzugsweise mit dem Basiselement verbunden ist. Der Anschlag kann so stabil ausgeführt sein und gegebenenfalls die kompletten Biegebereiche abdecken, so dass eine Zerstörung der Vorrichtung auch bei einer Überschreitung des vorgesehenen Maximaldrucks vermieden bzw. bei einer tatsächlich erfolgenden Zerstörung keine Gefährdung von in der Umgebung befindlichen Personen oder Gegenständen erfolgen kann.

Nach einer anderen Ausführungsform der Erfindung können mit einem Basiselement mehrere Beaufschlagungselemente über jeweils zwei Wandungen verbunden sein. An dieser Stelle sei daraufhin gewiesen, dass selbstverständlich auch die Verbindung von Basiselement und Beaufschlagungselement über jeweils mehrere Paare von Wandungen möglich ist, die jeweils einen druckbeaufschlagbaren Raum definieren.

Im Fall mehrerer, an einem Basiselement angeordneter Beaufschlagungselemente kann das Basiselement in einer speziellen Ausführungsform ringförmig, vorzugsweise kreisringförmig ausgebildet sein.

Hierdurch ist es beispielsweise möglich, ein stangenförmiges Element um seinen Außenumfang herum mit mehreren Beaufschlagungselementen zu klemmen bzw. zu bremsen. Selbstverständlich können die Beaufschlagungselemente auch radial vom ringförmigen Basiselement nach außen erstreckend ausgebildet sein, so dass auf diese Weise eine klemmende bzw. bremsende Wirkung durch eine innerhalb eines rohrförmigen Elements angeordnete Klemm- und/oder Bremsvorrichtung erzeugt werden kann, wie dies beispielsweise bei einer Trommelbremse der Fall ist.

Die Paare von Wandungen bzw. die Beaufschlagungselemente können dabei vorzugsweise jeweils in einer Ebene liegend und eng benachbart angeordnet sein.

Eine derartige Vorrichtung nach der Erfindung kann beispielsweise dadurch hergestellt werden, dass die Paare von Wandungen durch zwei Wandungselemente gebildet sind, welche als ringförmige, vorzugsweise als radial geschlitzte Platten ausgebildet sind. Die Wandungsbereiche zwischen den Schlitzen bilden bei einer derartigen Ausführungsform die Biegebereiche, an deren Ende jeweils ein Befestigungsbereich vorgesehen ist, welcher mit dem jeweiligen Beaufschlagungselement verbunden ist oder diese bildet. Der zusammenhängende Bereich der Wandungselemente (in Umfangsrichtung) bildet eine weiteren Befestigungsbereich, der mit dem Basiselement verbunden ist oder dieses bildet.

Die Abdichtung zwischen den Wandungen kann dadurch erfolgen, dass zwischen den separat ausgebildeten Wandungselementen zwei ringförmige Dichtelemente vorgesehen sind, die einen gemeinsamen Druckraum für die Paare von Wandungen bilden, wobei die Dichtelemente vorzugsweise dichtend zwischen den Befestigungsbereichen der Wandungselemente gehalten sind.

In den Biegebereichen der Wandungselemente kann jedoch anstelle zweier separater ringförmiger Dichtelemente auch ein Schlauchringelement vorgesehen sein, welches den gemeinsamen Druckraum für die Paare von Wandungen bildet.

Anstatt mit jedem Wandungspaar jeweils ein separates Beaufschlagungselement zu verbinden oder an diesem vorzusehen, kann auch ein einziges ringförmiges, vorzugsweise geschlitztes Beaufschlagungselement jeweils von den Endbereichen der Wandungspaare beaufschlagt werden.

Das Basis kann als im Wesentlichen geschlossenes, vorzugsweise zweiteiliges Gehäuse ausgebildet sein, in welchem die Wandungselemente aufgenommen sind, wobei vorzugsweise Innenwandungen des Gehäuses eine maximale Biegung der Biegebereiche der Wandungen begrenzen.

Auch das ringförmige, vorzugsweise geschlitzte Beaufschlagungselement kann im Gehäuse gehalten und hinsichtlich seiner radialen Dimensionsänderungen geführt sein.

Weitere Ausführungsformen der Erfindung ergeben sich aus den Unteransprüchen.

Die Erfindung wird nachfolgend an Hand in der Zeichnung dargestellter Ausführungsbeispiele näher erläutert. In der Zeichnung zeigen
- Figur 1: eine erste Ausführungsform einer Klemm- und/oder Bremsvorrichtung in einer perspektivischen Explosionsansicht (Fig. 1a) und einer perspektivischen, fertig montierten Ansicht (Fig. 1b) sowie einen Querschnitt durch die fertig montierte Vorrichtung;
- Figur2: eine perspektivische Darstellung einer Linearführung mit darin angeordneter Klemm- und/oder Bremsvorrichtung nach Figur 1 (Fig. 2a) sowie einen Querschnitt durch die Linearführung (Fig. 2b);
- Figur 3: einen Querschnitt durch eine Linearführung ähnlich Fig. 2, jedoch mit einer darin angeordneten zweiten Ausführungsform einer Klemm- und/oder Bremsvorrichtung in arretiertem bzw. gebremstem Zustand (Fig. 3a) sowie in gelöstem Zustand (Fig. 3b)
- Figur 4: eine perspektivische Ansicht (Fig. 4a) einer weiteren Ausführungsform einer Klemm- und/oder Bremsvorrichtung ähnlich der Ausführungsform in Fig. 3 sowie einen Querschnitt durch diese Vorrichtung (Fig. 4b);
- Figur 5: eine perspektivische Darstellung einer Anordnung mehrerer Klemm- und/oder Bremsvorrichtungen ähnlich Fig. 3 um den Umfang eines scheibenartigen zuklemmenden bzw. bremsenden Elements;
- Figur 6: eine perspektivische Teildarstellung (Fig. 6a) einer ringförmig ausgebildeten Klemm- und/oder Bremsvorrichtung mit mehreren Beaufschlagungselementen für das Beaufschlagen eines im Querschnitt kreiszylindrischen Objekts sowie eine perspelctivische Teildarstellung der Vorrichtung in fertig montiertem Zustand (Fig. 6b), wobei ein schlauchringförmiges Dichtelement zur Bildung des druckbeaufschlagbaren Raums vorgesehen ist;
- Figur 7: eine weitere Ausführungsform ähnlich Fig. 6, wobei der druckbeaufschlagbare Raum mittels zweier kreisringförmiger Dichtelemente gebildet ist.
- Figur 8: eine perspektivische Darstellung (Fig. 8a) einer ringförmig ausgebildeten Klemm- und/oder Bremsvorrichtung ähnlich Fig. 6, jedoch mit einem geschlitzten Beaufschlagungselement für das Beaufschlagen eines im Querschnitt kreiszylindrischen Objekts sowie zwei Schnittdarstellungen im drucklosen Zustand (Fig. 8b) und druckbeaufschlagtem Zustand (Fig. 8c);

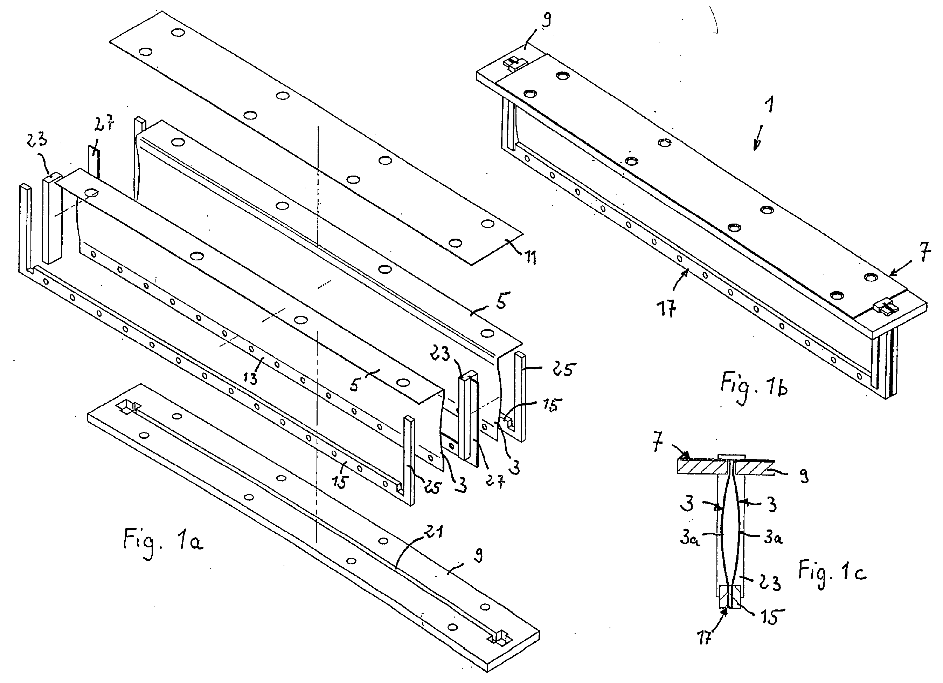

Die in Fig. 1 dargestellte Klemm- und/oder Bremsvorrichtung 1 umfasst, wie aus der Explosionsdarstellung nach Fig. 1a ersichtlich, zwei separat ausgebildete Wandungen bzw. Wandungselemente 3, die an einem Ende (oberer Bereich) rechtwinklig zum übrigen Verlauf der Wandungen abgewinkelt sind. Diese Befestigungsbereiche 5 sind in montiertem Zustand mit einem Basiselement 7 verbunden, welches durch eine Halteplatte 9 und eine Abdichtplatte 11 gebildet ist. Im unteren Bereich weisen die Wandungen bzw. die Wandungselemente 3 jeweils einen weiteren Befestigungsbereich 13 auf, der im montierten Zustand zwischen zwei Montageteilen 15 eines Beaufschlagungselements 17 gehalten ist. Zwischen den Befestigungsbereichen 13 ist ein Abstands- und/oder Dichtelement gehalten, welches im Wesentlichen die selbe Länge und die selbe Höhe aufweise wie die Montageteile 15 des Beaufschlagungselements 17. Das Verbinden der Montageteile 15 mit den Befestigungsbereichen 13 der Wandungselemente 3 und dem Abstands- und/oder Dichtelement kann beispielsweise durch Verschrauben, Verschweißen, Verkleben oder Verlöten erfolgen.

Die Verbindung erfolgt dabei vorzugsweise derart, dass entlang der Verbindungslinie eine druckdichte Verbindung entsteht.

Die Montage der Vorrichtung kann so erfolgen, dass zunächst die Wandungselemente 3 durch einen mittigen Längsschlitz 21 der Halteplatte 9 gesteckt werden, bis die abgewinkelten Befestigungsbereiche 5 auf der Oberfläche der Halteplatte 9 aufliegen. Anschließend kann das Abstands- und/oder Dichtelement zwischen die Befestigungsbereiche 13 der Wandungselemente 3 eingesetzt werden. Das Beaufschlagungselement 17 wird durch das außenseitige Aufsetzen der Montageteile 15 auf die Befestigungsbereiche 13 und das Verbinden dieser Elemente in den betreffenden Bereichen, beispielsweise durch Vernieten, Verschrauben, Verschweißen oder dergleichen hergestellt. Der nach oben offene Schlitz zwischen den Wandungselementen 3 wird mittels einer Abdichtplatte 11 verschlossen, welches auf die abgewinkelten Befestigungsbereiche 5 aufgelegt wird. Die Abdichtplatte wird, beispielsweise durch Verschrauben oder Vernieten, mit der Halteplatte 9 verbunden, wobei die abgewinkelten Befestigungsbereiche 5 fixiert werden. Selbstverständlich können diese Bereiche der Halteplatte 9, der Abdichtplatte 11 und der dazwischen angeordneten Befestigungsbereiche 5 auch in jeder anderen Weise verbunden werden, die eine im Wesentlichen druckdichte Verbindung darstellt. Das Zuführen eines Druckmediums in den Raum zwischen den Wandungselementen 3 kann beispielsweise durch eine nicht näher dargestellte Öffnung in der Abdichtplatte 11 im Bereich des mittigen Längsschlitzes 21 der Halteplatte 9 erfolgen.

Die seitliche Abdichtung des druckbeaufschlagbaren Raums zwischen den Wandungen 3 kann mittels zweier seitlicher Dichtelemente 23 erfolgen. Diese sind jeweils zwischen einem sich von den Montageteilen 15 außenseitig nach oben erstreckenden Arms 25 sowie mittels eines entsprechenden, sich außenseitig vom Abstands- und/oder Dichtelement 19 nach oben erstreckenden Arms 27 zwischen den seitlichen Stirnflächen der Wandungen 3 und den Armen 25, 27 gehalten. Die Dichtelemente 23 können aus einem ausreichend flexiblen Kunststoff oder aus Gummi bzw. Hartgummi bestehen. Das Dichtelement kann mittels der Arme 25, 27 mit ausreichendem Druck an die seitlichen Stirnflächen der Wandungen 3 gepresst sein, um eine ausreichend druckdichte Abdichtung zu gewährleisten.

An dieser Stelle sei darauf hingewiesen, dass es sich bei dem in Fig. 1 dargestellten Zustand der Klemm- und/oder Bremsvorrichtung 1 um den druckbeaufschlagten Zustand handeln kann. In diesem Zustand sind die Biegeberreiche 3a der Wandungen 3, bezogen auf den druckbeaufschlagbaren Raum zwischen den Wandungen 3, konvex nach außen dargestellt. Im drucklosen Zustand können die Biegebereiche 3a der Vorrichtung 1 nach Fig. 1 beispielsweise im Wesentlichen parallel und eben verlaufen.

Die Biegebereiche 3a sind so ausgestaltet und dimensioniert, dass die Biegebereiche zwischen dem Basiselement 7 und dem Beaufschlagungselement 17 ein federndes Element bilden, welches in der Lage ist, bereits im drucklosen Zustand eine ausreichende Beaufschlagungskraft auf ein zu klemmendes oder zu bremsendes Objekt zu übertragen. Beispielsweise können die Wandungen aus einem Federstahlblech hergestellt sein, dessen Dicke beispielsweise 0,5 mm betragen kann.

Um bei einer Beaufschlagung des Beaufschlagungselements 17 mit einer vorbestimmten Kraft im drucldosen Zustand zu gewährleisten, dass die Biegebereiche 3a jeweils konvex nach außen gebogen werden, können die Biegebereiche 3a auch im drucklosen Zustand eine leichte, nach außen konvexe Biegung aufweisen, hierdurch wird eine entsprechende Präferenz für die gewünschte Biegerichtung erreicht.

Selbstverständlich ist jedoch ebenfalls möglich, die Ausführungsform nach Fig. 1 als Darstellung des drucklosen Zustand aufzufassen. Mittels einer derartigen Ausführungsform, die bereits im drucklosen Zustand eine deutliche, nach außen konvexe Biegung der Biegebereiche 3a aufweist, kann ebenfalls mittels einer Beaufschlagung des Druckraums mit Überdruck erreicht werden, dass sich der Abstand zwischen Beaufschlagungselement 17 und Basiselement 9 reduziert bzw. dass sich die bei einer im drucklosen Zustand vorgespannt montierten Vorrichtung auf das zu beaufschlagende Objekt übertragenen Kräfte reduzieren. Zusätzlich kann erreicht werden, dass bei einer Beaufschlagung des Druckraums mit Unterdruck die übertragenen Kräfte erhöht werden, da die Biegebereiche 3a bei einer derartigen Druckbeaufschlagung nach innen bewegt werden sollen und sich demzufolge der Abstand zwischen Beaufschlagungselement 17 und Basiselement 9 zu vergrößern versucht.

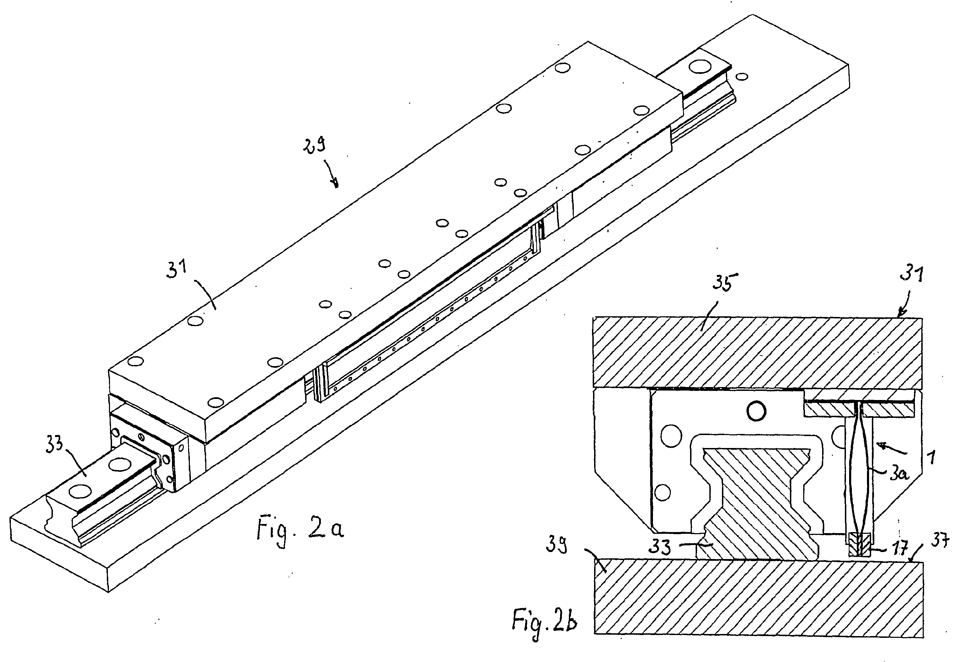

Die Wirkung der Vorrichtung 1 in Fig. 1 ist in Fig. 2 am Beispiel einer Linearführung 29 dargestellt. Die Linearführung 29 umfasst einen Schlitten 31, auf dem ein beliebiges weiteres Objekt angeordnet bzw. mit dem ein beliebiges weiteres Objekt verbunden sein kann. Der Schlitten 31 ist mittels näher nicht dargestellter Rollen- oder Kugellager auf einer Schiene 33 geführt. Die Vorrichtung 1 nach Fig. 1 ist unterhalb einer Trägerplatte 35 des Schlittens 31 und seitlich neben dem Verlauf der Schiene 33 montiert. Hierzu kann die Halteplatte 9 in nicht näher dargestellter Weise mit der Unterseite der Trägerplatte 35 verbunden, beispielsweise verschraubt sein.

Bei der Darstellung in Fig. 2 ist davon ausgegangen, dass sich die Vorrichtung 1 in Fig. 2b in druckbeaufschlagtem Zustand befindet, demzufolge die Biegebereiche 3a der Wandungselemente 3 gegenüber dem drucklosen Zustand (mit im Wesentlichen parallel und eben verlaufenden Druckbereichen) konvex nach außen gebogen sind und infolgedessen das Beaufschlagungselement 17 von einer Beaufschlagungsfläche 37 eines Objekts 39, auf dem die Schiene 33 montiert ist, abgehoben wurde.

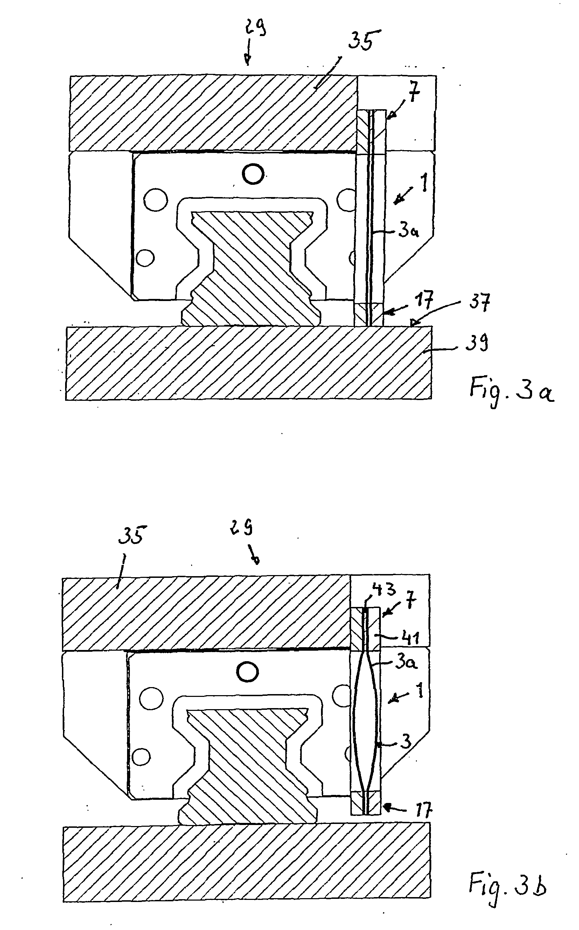

Die Funktionsweise einer derartigen Ausführungsform einer Klemm- und/oder Bremsvorrichtung 1 in Verbindung mit einer Linearführung 29 ist nochmals an Hand einer leicht abgewandelten Ausführungsform in den Fig. 3a und Fig. 3b im Querschnitt dargestellt. Bei dieser Linearführung 29 findet eine Klemm- und/oder Bremsvorrichtung 1 in einer leicht abgeänderten Ausführungsform Verwendung, bei der auch der obere Bereich bzw. das Basiselement 7 durch zwei Montageteile 41 gebildet ist, welche auf beiden Seiten von oberen Befestigungsbereichen der Wandungselemente 3 angeordnet sind. Wie im Fall des Beaufschlagungselements 17 ist in diesem Fall zwischen den oberen Befestigungsbereichen der Wandungselemente 3 ebenfalls eine Abstands- und/oder Dichtelement 43 eingesetzt. Das Verbinden der Montageteile 41, der oberen Befestigungsbereiche der Wandungselemente 3 und des dazwischen angeordneten Abstands- und/oder Dichtelement 43 kann wiederum durch Verschrauben, Vernieten, Verschweißen oder dergleichen erfolgen. Das Basiselement 7 kann dann mit einer Längsseite der Trägerplatte 35 verbunden, beispielsweise verschraubt werden. Das Zuführen des Druckmediums kann beispielsweise durch einen oder mehrere Kanäle (nicht dargestellt) im Basiselement 7 erfolgen. Teile der Kanäle können hierzu in den Montageteilen 41, den Befestigungsbereichen der Wandungselemente 3 bzw. dem Abstands- und/oder Dichtelement 43 vorgesehen sein.

Fig. 3a zeigt den drucklosen Zustand der Vorrichtung 1. In diesem Zustand ist das Beaufschlagungselement 17 mit einer vorbestimmten Kraft gegen die Beaufschlagungsfläche 37 des Objekts 39 gepresst. Die durch diesen vorgespannten Montagezustand bedingte leichte Krümmung der Biegebereiche 3a der Wandungselemente 3 ist bei der Darstellung in Fig. 3a vernachlässigt. Die Vorspannkraft kann dadurch bestimmt werden, dass das Beaufschlagungselement 17 im vorgespannten Montagezustand um einen vorbestimmten Weg gegenüber dem entlasteten Zustand in Richtung auf das Basiselement 7 zu bewegt ist.

Bei einer Beaufschlagung des Druckraums zwischen den Wandungselementen 3 mit Druck durch das Zuführen eines beliebigen Druckmediums, vorzugsweise Druckluft, werden die Biegebereiche 3a konvex nach außen gebogen und demzufolge reduziert sich die Vorspannkraft bzw. wird das Beaufschlagungselement 17 letztlich vollständig von der Beaufschlagungsfläche 37 abgehoben. Hierdurch lässt sich die Bremswirkung bzw. Klemmwirkung reduzieren oder vollkommen aufheben.

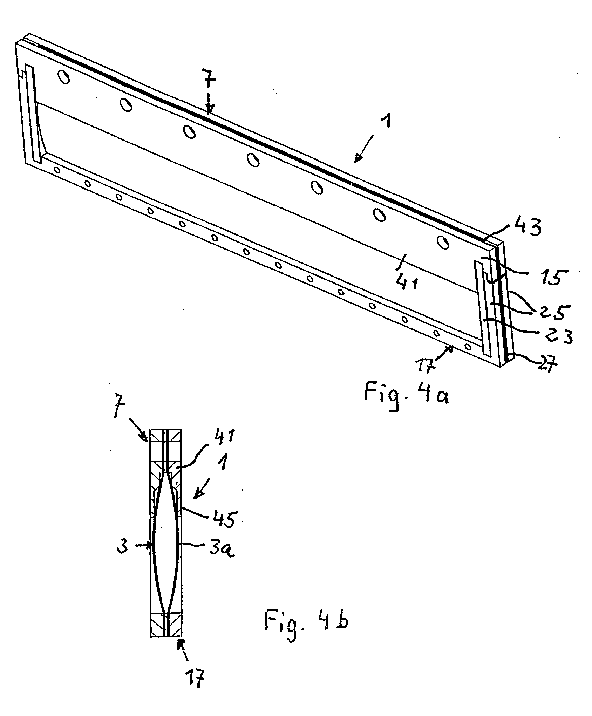

Die in Fig. 4 dargestellte Ausführungsform einer Klemm- und/oder Bremsvorrichtung 1 entspricht im Wesentlichen den zuvor erläuterten Ausführungsformen. Zusätzlich weisen die Montageteile 41, welche vom Basiselement 7 umfasst sind bzw. dieses bilden, zusätzlich Anschläge 45 auf, die als begrenzende Elemente hinsichtlich der maximalen Krümmung der Biegebereiche 3a der Wandungselemente 3 berücken. Die Anschläge 45 erstrecken sich vom oberen Bereich der Montageteile 41 aus in Richtung auf das Beaufschlagungselement 17. Die Anschläge können sich selbstverständlich auch im Querschnitt über den gesamten Biegebereich 3a erstrecken. Die Anschläge 45 gewährleisten somit, dass auch bei einer Überschreitung des zulässigen Maximaldrucks bei der Beaufschlagung des zwischen den Wandungselementen 3 gebildeten Druckraums die Wandungen nicht zerstört werden bzw. im Zerstörungsfall in der Umgebung sämtliche Personen oder Sachen nicht beschädigt werden.

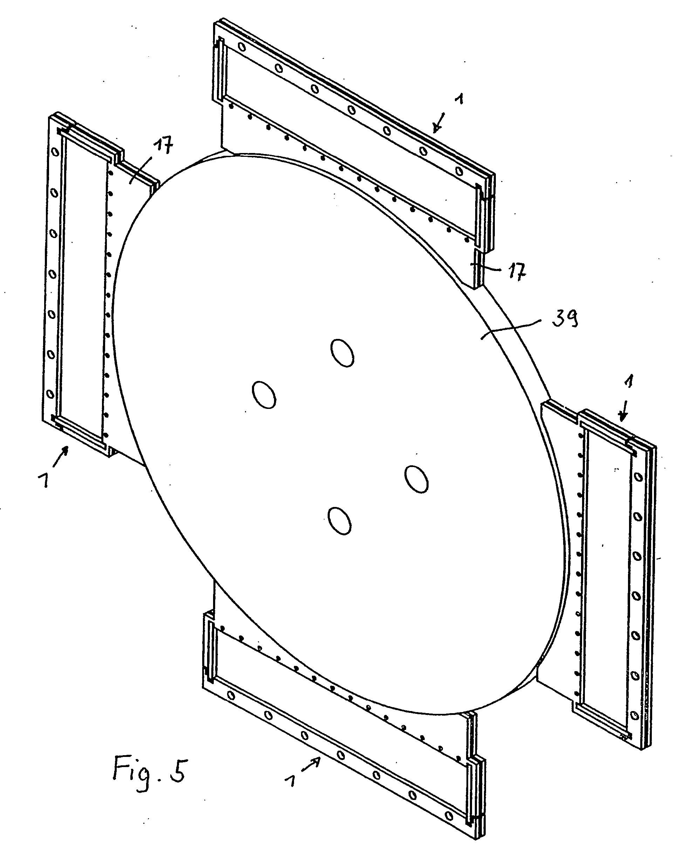

Fig. 5 zeigt eine Anordnung bestehend aus einem beaufschlagendem kreiszylindrischen Objekt 39, um dessen Umfangsfläche in äquidistanten Abständen 4 Klemm- und/oder Bremsvorrichtungen 1 angeordnet sind. Die einzelnen Vorrichtungen 1 können im Wesentlichen so ausgebildet sein, wie dies beispielsweise in den Fig. 3 oder 4 dargestellt ist. Der einzige Unterschied besteht darin, dass die Beaufschlagungselemente 17 an der Beaufschlagungsfläche so ausgestaltet sind, dass die Beaufschlagungsfläche der Beaufschlagungselemente 17 einen Radius aufweist, der dem Radius des zu beaufschlagenden kreiszylindrischen Objekts 39 entspricht.

An dieser Stelle sei der Deutlichkeit halber nochmals darauf hingewiesen, dass bei allen bisher beschriebenen Ausführungsformen von Klemm- und/oder Bremsvorrichtungen 1 das Beaufschlagungselement und das Basiselement jeweils ausschließlich über die Wandungselemente 3 verbunden sind. Die seitlichen Arme 25 bzw. 27 der Montageteile 15 bzw. des Abstands- und/oder Dichtelements 19 dienen lediglich zur Fixierung der seitlichen Dichtelement 23. In gleicher Weise können sich (wie in Fig. 4 dargestellt) entsprechende kurze Haltearme von den Montageteilen 15 in Richtung auf das Beaufschlagungselement 17 erstrecken. Auch diese dienen jedoch lediglich zur Halterung der seitlichen Dichtelemente 23. Zwischen den Stirnseiten der Arme 25, 27 unter der entsprechenden (kurzen) Arme der Montageteile 15 bzw. des dazwischen angeordneten Abstands- und/oder Dichteelement 43 verbleibt ein Spalt, der eine entsprechende freie Bewegung des Beaufschlagungselements 17 gegenüber dem Basiselement 7 ermöglicht.

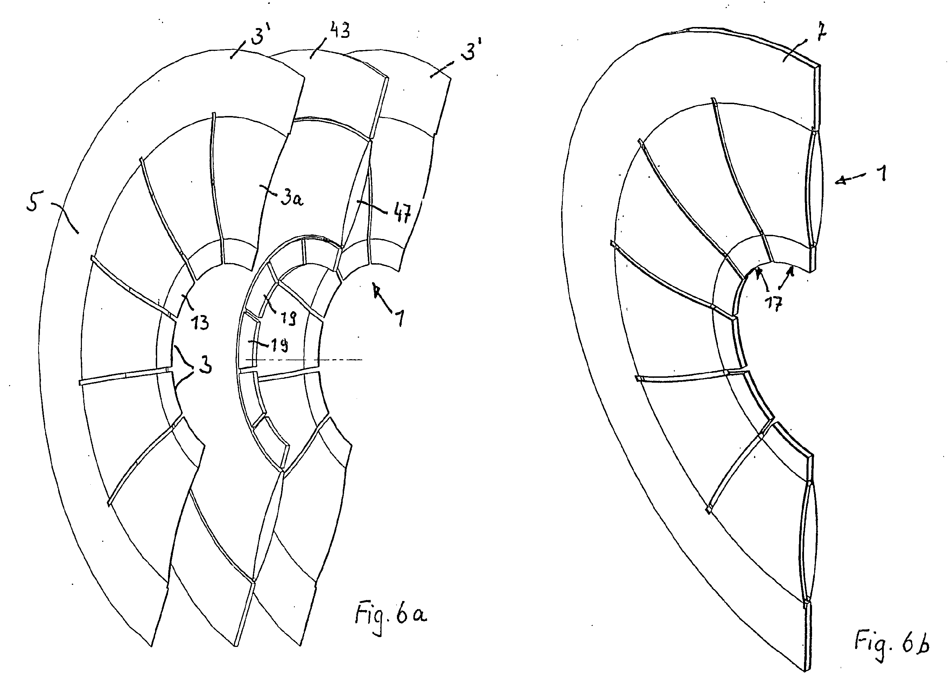

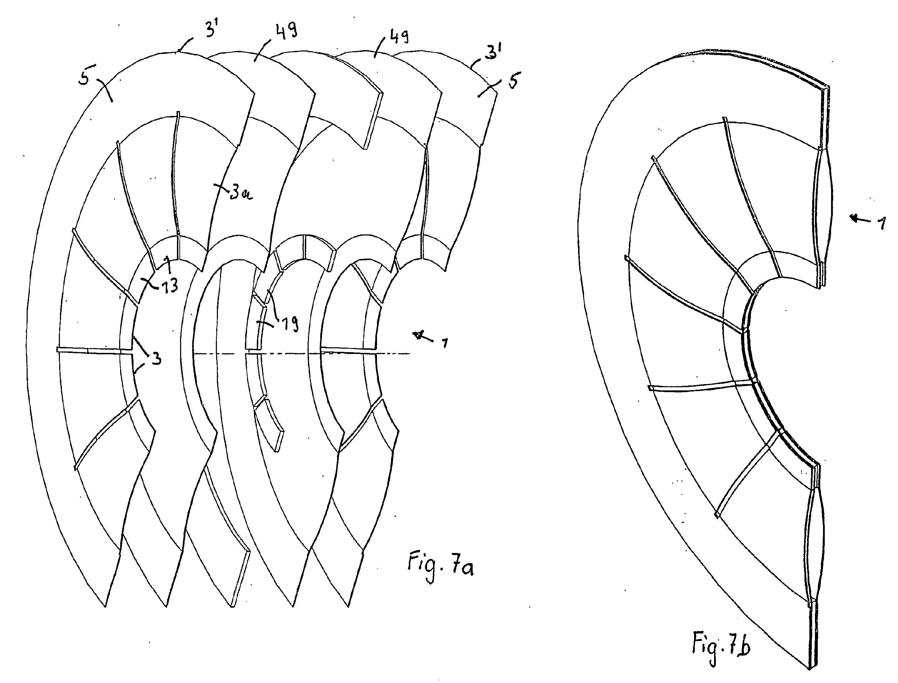

Die Klemm- und/oder Bremsvorrichtung 1 nach Fig. 6 ist ringförmig ausgebildet (Fig. 6 zeigt nur einen halben Teilring), wobei die Vorrichtung 1 aus zwei radial geschlitzten, ringförmigen Wandungselementen 3' besteht, zwischen welchen im Bereich der inneren Befestigungsbereiche 13 der einzelnen Wandungen jeweils ein Abstands- und/oder Dichtelement 19 angeordnet ist und im Bereich des ringförmigen Befestigungsbereichs 5 ein ringförmiges Abstands- und/oder Dichtelement 43. Zur Montage werden die Wandungselemente 3' in den Befestigungsbereichen 5 und 13 mit den dazwischen angeordneten Abstands- und/oder Dichtelementen 43 bzw. 19 fest verbunden. Das Verbinden kann beispielsweise durch Verschrauben, durch Vernieten, Verschweißen oder dergleichen folgen. Auf diese Weise entsteht die in Fig. 6b dargestellte Klemm- und/oder Bremsvorrichtung 1, welche insgesamt ringförmig ausgebildet ist. Von dem ringförmigen Basiselement 7 ausgehend erstrecken sich mehrere Paare von Wandungen 3 radial nach innen, welche jeweils durch einen radial verlaufenden Schlitz voneinander getrennt sind. Diese Wandungspaare sind jeweils mit einem Beaufschlagungselement 17 verbunden, welche an der innenseitigen Stirnseite Umfangsabschnitte einer kreiszylindrischen Öffnung definieren, in welcher ein kreiszylindrisches Element beaufschlagt werden kann. Hierbei kann es sich um eine rotierende Welle eines Antriebs oder dergleichen handeln. Die Funktionsweise dieser Vorrichtung entspricht analog der Funktionsweise, wie sie zuvor in Verbindung mit den Ausführungsformen in den Figuren 1 bis 5 erläutert wurde.

Die Ausführungsform nach Fig. 6 kann so gestaltet sein, dass zwischen jedem Wandungspaar ein abgeschlossener Druckraum definiert wird. Hierzu müsste beispielsweise in den den radial verlaufenden Schlitzen benachbarten Teilen der Wandungen ein Dichtelement gehalten sein, das beispielsweise eingeklebt werden kann. Eine separate Ansteuerung der einzelnen Beaufschlagungselemente 17 ist bei dieser Ausführungsform jedoch nicht nötig. Aus diesem Grund bietet es sich an, sämtliche Druckräume, die durch die Paare von Wandungen definiert werden, zu einem gemeinsamten Druckraum miteinander zu verbinden.

Hierzu ist bei der in Fig. 6 dargestellten Ausführungsform ein ringförmiges Schlauchelement 47 zwischen den Biegebereichen 3a der Wandungselemente 3 eingesetzt.

Diesem Schlauchelement 47 kann in nicht näher dargestellter Weise das Druckmedium zugeführt werden. Auf diese Weise werden bei einer Druckbeaufschlagung sämtliche Paare von Wandungen gleichmäßig beaufschlagt und die betreffenden Biegebereiche 3a bei einer Beaufschlagung mit Überdruck nach außen gebogen. Dabei sei wiederum davon ausgegangen, dass der in Fig. 6 dargestellte Zustand der Klemm- und/oder Bremsvorrichtung 1 der druckbeaufschlagte Zustand ist.

Bei dieser Ausgestaltung verlaufen die Biegebereiche 3a im drucklosen Zustand im Wesentlichen parallel (abgesehen von der oben angesprochenen geringfügigen konvexen Ausbildung zur Definition einer Präferenzrichtung der Biegung bei Beaufschlagung der Beaufschlagungselemente 17 im drucklosen Zustand).

Es kann sich bei der in Fig. 6 dargestellten Vorrichtung 1 jedoch auch um eine Vorrichtung im drucklosen Zustand handeln. Diese Vorrichtung kann dann auch so verwendet werden, dass bei einer Beaufschlagung des Druckraums mit Unterdruck eine Bewegung der einzelnen Beaufschlagungselemente 17 nach innen erfolgt. Hierzu müssten die Wandungen des Schlauchrings 47 in den Biegebereichen 3a jedoch so fest mit den Innenwandungen der Wandungselemente 3'verbunden sein, dass entsprechende einwärts gerichtete Kräfte auf die Biegebereiche übertragen werden können. Nach einer anderen, nicht näher dargestellten Ausführungsform können in den radialen Schlitzen jedoch wiederum seitliche Dichtelemente gehalten sein, die eine Abdichtung der einzelnen Druckräume zwischen den einzelnen Biegebereichen 3a bewirken.

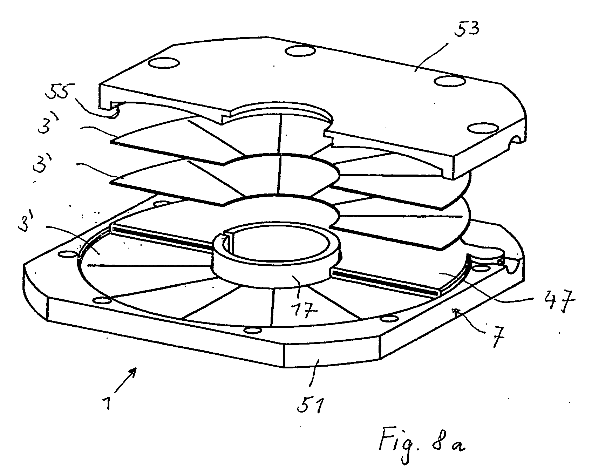

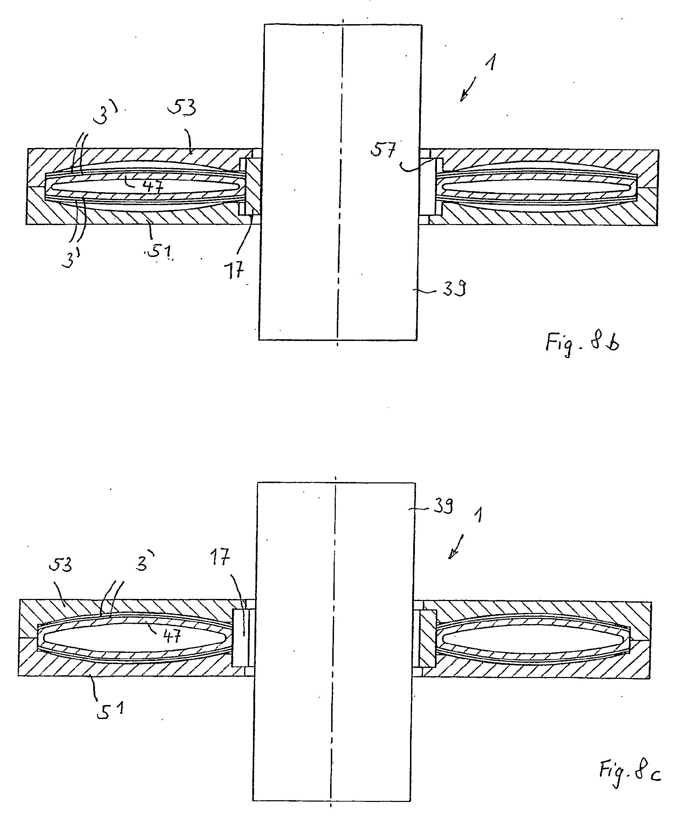

Die Ausführungsform einer Klemm- und/oder Bremsvorrichtung nach Fig. 7 entspricht weitestgehend in Fig. 6 dargestellten Ausführungsform, jedoch sind bei dieser Ausführungsform zwei kreisringförmige Dichtelemente 49 zwischen den kreisringförmigen, radial geschlitzten Wandungselementen 3' gehalten. Die Fixierung der Dichtungselemente 49 erfolgt im äußeren ringförmigen Bereich der Befestigungsbereiche 5 der Wandungselemente 3' und in den inneren Befestigungsbereichen 13 der einzelnen Wandungen 3.

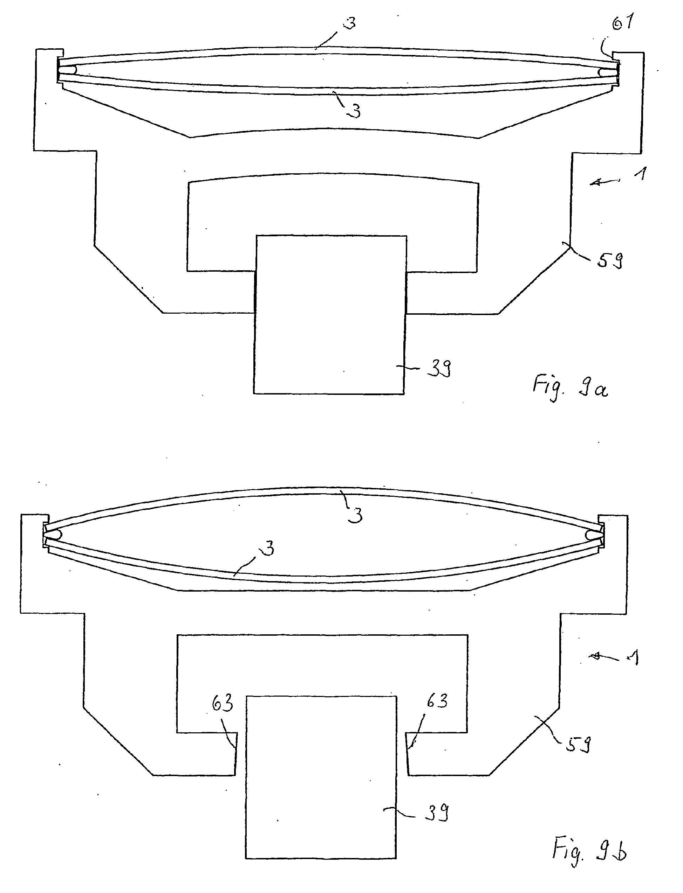

Fig. 8 zeigt eine weitere Ausführungsform einer Klemm- und/oder Bremsvorrichtung 1, welche für das Klemmen bzw. Bremsen eines nicht dargestellten, im Querschnitt kreisförmigen Elements, beispielsweise einer axial bewegbaren Stange oder einer rotierbaren Welle geeignet ist. Selbstverständlich kann diese Ausführungsform auch so abgewandelt werden, dass Elemente mit anderen Querschnitten geklemmt bzw. gebremst werden können.

Wie aus der perspektivischen Explosionsansicht in Fig. 8a ersichtlich, umfasst die Vorrichtung 1 ein Basiselement 7, welches als Gehäuse ausgebildet ist. Das Basiselement 7 kann Mittel zur Befestigung der Vorrichtung an einem weiteren Element aufweisen.

Das Gehäuse weist, wie in Fig. 8 dargestellt, vorzugsweise zwei Gehäusehälften auf, die in ihrem Inneren an beiden Seiten eines ringförmigen Schlauchelements 47 jeweils zwei radial geschlitzte Wandungselemente 3', ähnlich den Ausführungsformen in den Fig. 6 und 7, aufnehmen. Diese Wandungselemente 3' sind jedoch nicht fest miteinander verbunden, sondern stützen sich mit ihrem Außenumfang an der Umfangswandung 55 der Gehäusehälften 51, 53 ab und mit ihrem Innenumfang bzw. mit den radial einwärts gerichteten Stirnflächen der einzelnen Wandungen 3, die durch die Schlitze voneinander getrennt sind, am Außenumfang eines in radialer Richtung federnden Beaufschlagungselements 17. Zur Erlangung der federnden Eigenschaft ist das ringförmige Beaufschlagungselement 17 vorzugsweise geschlitzt ausgebildet, so dass eine Veränderung des Innendurchmessers bzw. der inneren geometrischen Abmessungen mit geringeren Kräften möglich ist, als bei einem ringförmig geschlossenen Beaufschlagungselement. Die Wandungselemente 3' sind so dimensioniert, dass sie im Ausgangszustand, d.h. im drucklosen Zustand des ringförmigen Schlauchelements 47 ohne ein in die Vorrichtung eingesetztes zu klemmendes oder zu bremsendes Objekt, bereits eine vorbestimmte Druckkraft auf das Schlauchelements 47 ausüben und dieses zusammendrücken. Bei einer Druckbeaufschlagung des Schlauchelements 47 mit Überdruck werden die Wandungselemente 3' jeweils nach außen gebogen und nehmen maximal die in Fig. 8c dargestellte Endstellung ein. Die Endstellung ist durch die Innenwandung der jeweiligen Gehäusehälfte 51, 53 definiert. Die Wandungen der Gehäusehälften 51,53 dienen dabei gleichzeitig als Schutz für die Umgebung bzw. Verhindern eine Zerstörung der Vorrichtung auch wenn der zulässige Druck, der für das Erreichen der Endstellung erforderlich ist, überschritten wird. Das Schlauchelement 47 dehnt sich bei einer Druckbeaufschlagung des Schlauchelements 47 radial infolge der nachlassenden Kräfte, die von den Wandungselementen 3' im drucklosen Zustand auf das Beaufschlagungselement 17 ausgeübt werden. Die Wandungselemente 3' und das Beaufschlagungselement 17 müssen dabei hinsichtlich ihrer geometrischen Abmessungen und ihrer Materialeigenschaften so dimensioniert sein, dass sich ein ausreichender vorgegebener Federweg des Beaufschlagungselements 17 ergibt, falls ein vollkommenes Lösen des Objekts 39 gewünscht ist bzw. eine ausreichende vorgegebene Reduzierung der auf das Objekt 39 ausgeübten Klemm- oder Bremskraft. Das Beaufschlagungselement 17 kann dabei, wie in den Fig. 8b und 8c dargestellt, in einer ringnutähnlichen Ausnehmung 57 im Innenumfang der Gehäusehälften 51, 53 hinsichtlich seines radialen Federwegs geführt sein.

Durch die Verwendung von zwei Wandungselementen 3' beiderseits des Schlauchelements 47 ergibt sich im Ausgangszustand eine höhere Klemm- oder Bremskraft als bei der Verwendung von jeweils einem einzigen Wandungselement beiderseits des Schlauchelements. Selbstverständlich können jedoch beiderseits des Schlauchelements 47 jeweils eine beliebige Anzahl von Wandungselementen 3 vorgesehen sein.

Selbstverständlich lässt sich das Merkmal eines federnden, ringförmigen Beaufschlagungselements, das vorzugsweise geschlitzt ausgebildet ist, auch mit Merkmalen der vorhergehenden Ausführungsformen, insbesondere nach den Fig. 6 und 7, kombinieren.

Abschließend sei daraufhin gewiesen, dass sämtliche Merkmale, die vorstehend in Verbindung mit einzelnen bestimmten Ausführungsformen näher erläutert sind, auch mit anderen Ausführungsformen einsetzbar sind, soweit dies sinnvoll ist. Beispielsweise können selbstverständlich auch die Ausführungsformen nach den Fig. 6 und 7 entsprechende Anschläge zur Begrenzung der Biegbewegungen der Biegebereiche 3a der einzelnen Wandungen 3 aufweisen.

## Patentansprüche

1. Klemm- und/oder Bremsvorrichtung
(a) mit einem Basiselement (7), welches über wenigstens zwei benachbarte Wandungen (3) fest mit einem in Richtung vom Basiselement (7) weg oder auf das Basiselement zu beweglichen Beaufschlagungselement (17) verbunden ist, über welches die erzeugten Klemm- und/oder Bremskräfte auf ein Objekt (39) übertragbar sind,
(b) wobei die wenigstens zwei benachbarten Wandungen (3) einen mit Überdruck oder Unterdruck beaufschlagbaren im Wesentlichen abgedichteten Druckraum definieren,
(c) wobei die wenigstens zwei Wandungen (3) jeweils einen Biegebereich (3a) aufweisen, der so zugfest und dennoch so elastisch biegbar ausgebildet ist, dass die Biegebereiche (3a) zwischen dem Basiselement (7) und dem Beaufschlagungselement (17) ein federndes Element bilden,
**dadurch gekennzeichnet, dass**
(d) die wenigstens zwei Wandungen (3) im drucklosen Einbauzustand der Klemm- und/oder Bremsvorrichtung (1) die Klemm- und/oder Bremskraft über das Beaufschlagungselement (17) auf das Objekt (39) ausüben, und
(e) wobei die wenigstens zwei Wandungen (3) und deren Biegebereiche (3a) so ausgebildet und dimensioniert sind,
(i) dass bei einer Beaufschlagung des Druckraums mit Überdruck in Folge einer Vergrößerung der Krümmung der Biegebereiche (3a) eine Reduzierung der über das Beaufschlagungselement (17) auf das Objekt (39) übertragbaren Klemm- und/oder Bremskräfte bewirkt wird oder eine Bewegung des Beaufschlagungselements (17) in Richtung auf das Basiselement (7) zu erfolgt und dass bei einer Beaufschlagung des Druckraums mit Unterrdruck in Folge einer Reduzierung der Krümmung der Biegebereiche (3a) eine Erhöhung der über das Beaüfschlagungselement (17) auf das Objekt (39) übertragbaren Klemm- und/oder Bremskräfte bewirkt wird oder eine Bewegung des Beaufschlagungselements (17) in Richtung vom Basiselement (7) weg erfolgt, oder
(ii) dass umgekehrt bei einer Beaufschlagung des Druckraums mit Unterdruck in Folge einer Vergrößerung der Krümmung der Biegebereiche (3a) eine Reduzierung der über das Beaufschlagungselement (17) auf das Objekt (39) übertragbaren Klemm- und/oder Bremskräfte bewirkt wird oder eine Bewegung des Beaufschlagungselements (17) in Richtung auf das Basiselement (7) zu erfolgt und dass bei einer Beaufschlagung des Druckraums mit Überdruck in Folge einer Reduzierung der Krümmung der Biegebereiche (3a) eine Erhöhung der über das Beaufschlagungselement (17) auf das Objekt (39) übertragbaren Klemm- und/oder Bremskräfte bewirkt wird oder eine Bewegung des Beaufschlagungselements (17) in Richtung vom Basiselement (7) weg erfolgt.

2. Klemm- und/oder Bremsvorrichtung
(a) mit einem Basiselement (7) und einem in Richtung vom Basiselement (7) weg oder auf das Basiselement zu beweglichen Beaufschlagungselement (17), über welches die erzeugten Klemm- und/oder Bremskräfte auf ein Objekt (39) übertragbar sind, sowie wenigstens zwei benachbarte Wandungen (3), welche mit jeweils einem Endbereich das Basiselement (7) und das Beaufschlagungselement (17) beaufschlagen,
(b) wobei die wenigstens zwei benachbarten Wandungen (3) einen mit Druck oder Unterdruck beaufschlagbaren im Wesentlichen abgedichteten Druckraum definieren,
(c) wobei die wenigstens zwei Wandungen (3) jeweils einen Biegebereich (3a) aufweisen, der so zugfest und dennoch so elastisch biegbar ausgebildet ist, dass die Biegebereiche (3a) zwischen dem Basiselement (7) und dem Beaufschlagungselement (17) ein federndes Element bilden,
**dadurch gekennzeichnet, dass**
(d) die wenigstens zwei Wandungen (3) im drucklosen Einbauzustand der Klemm- und/oder Bremsvorrichtung (1) die Klemm- und/oder Bremskraft über das Beaufschlagungselement (17) auf das Objekt (39) ausüben, und
(e) wobei die wenigstens zwei Wandungen (3) und deren Biegebereiche (3a) so ausgebildet und dimensioniert sind,
(i) dass bei einer Beaufschlagung des Druckraums mit Überdruck in Folge einer Vergrößerung der Krümmung der Biegebereiche (3a) eine Reduzierung der über das Beaufschlagungselement (17) auf das Objekt (39) übertragbaren Klemm- und/oder Bremskräfte bewirkt wird oder eine Bewegung des Beaufschlagungselements (17) in Richtung auf das Basiselement (7) zu erfolgt und dass bei einer Beaufschlagung des Druckraums mit Unterrdruck in Folge einer Reduzierung der Krümmung der Biegebereiche (3a) eine Erhöhung der über das Beaufschlagungselement (17) auf das Objekt (39) übertragbaren Klemm- und/oder Bremskräfte bewirkt wird oder eine Bewegung des Beaufschlagungselements (17) in Richtung vom Basiselement (7) weg erfolgt, oder
(ii) dass umgekehrt bei einer Beaufschlagung des Druckraums mit Unterdruck in Folge einer Vergrößerung der Krümmung der Biegebereiche (3a) eine Reduzierung der über das Beaufschlagungselement (17) auf das Objekt (39) übertragbaren Klemm- und/oder Bremskräfte bewirkt wird oder eine Bewegung des Beaufschlagungselements (17) in Richtung auf das Basiselement (7) zu erfolgt und dass bei einer Beaufschlagung des Druckraums mit Überdruck in Folge einer Reduzierung der Krümmung der Biegebereiche (3a) eine Erhöhung der über das Beaufschlagungselement (17) auf das Objekt (39) übertragbaren Klemm- und/oder Bremskräfte bewirkt wird oder eine Bewegung des Beaufschlagungselements (17) in Richtung vom Basiselement (7) weg erfolgt.

3. Vorrichtung nach einem der vorhergehenden Ansprüche, **dadurch gekennzeichnet, dass** die Biegebereiche (3a) im drucklosen Zustand im Wesentlichen parallel verlaufen, und vorzugsweise einen geringen Abstand aufweisen, der im Bereich von 0,1 mm bis 10 mm, vorzugsweise von 1 mm bis 5 mm liegt.

4. Vorrichtung nach einem der vorhergehenden Ansprüche, **dadurch gekennzeichnet, dass** die Wandungen (3) als separate Teile ausgebildet sind und einen Befestigungsbereich (5) aufweisen, mit welchem die Wandungen (3), vorzugsweise druckdicht mit dem Basiselement (7) verbunden sind, oder dass die Befestigungsbereiche (5) so gestaltet sind, dass sie nach dem vorzugsweise druckdichten Verbinden miteinander das Basisteil (7) bilden.

5. Vorrichtung nach Anspruch 4, **dadurch gekennzeichnet, dass** die Wandungen (3) im Bereich des Basiselements (7) jeweils einen rechtwinkelig abgewinkelten Befestigungsbereich (15) aufweisen und dass die Befestigungsbereiche (5) vorzugsweise druckdicht mit einem im Wesentlichen quer zu den Biegebereichen (3a) verlaufenden Basiselement (7) verbunden sind, das vorzugsweise eine Halteplatte umfasst.

6. Vorrichtung nach einem der vorhergehenden Ansprüche, **dadurch gekennzeichnet, dass** die Wandungen (3) als separate Teile ausgebildet sind und einen Befestigungsbereich (13) aufweisen, mit welchem die Wandungen (3) vorzugsweise druckdicht mit dem Beaufschlagungselement (17) verbunden sind, oder dass die Befestigungsbereiche (13) so gestaltet sind, dass sie nach dem vorzugsweise druckdichten Verbinden miteinander das Beaufschlagungselement (17) bilden.

7. Vorrichtung nach einem der vorhergehenden Ansprüche, **dadurch gekennzeichnet, dass** der Druckraum an den Seitenbereichen der Wandungen (3) mittels stumpf daran anschließender seitlicher Dichtelemente (23) abgedichtet ist, welche vorzugsweise aus Kunststoff oder Gummi bestehen.

8. Vorrichtung nach einem der Ansprüche 4 bis 7, **dadurch gekennzeichnet, dass** zwischen den als separate Teile ausgebildeten Wandungen (3) im Bereich des Basiselements (7) und/oder des Beaufschlagungselements (17) ein Abstands- und/oder Dichtelement (19, 43) eingesetzt ist.

9. Vorrichtung nach einem der Ansprüche 7 und 8, **dadurch gekennzeichnet, dass** sich ausgehend vom Basiselement (7) oder Beaufschlagungselement (17) ein Haltearm (25, 27) für das betreffende seitliche Dichtelement (23) in Richtung auf das Beaufschlagungselement (17) oder das Basiselement (7) erstreckt, wobei das seitliche Dichtelement (23) vorzugsweise zwischen den seitlichen Stirnflächen der Wandungen (3) und dem Haltearm (25, 27) angeordnet ist.

10. Vorrichtung nach einem der vorhergehenden Ansprüche, **dadurch gekennzeichnet, dass** der Bewegungsweg der Biegebewegung der Biegebereiche (3a) Wandungen (3) bei Druckbeaufschlagung durch einen mechanischen Anschlag (45) begrenzt ist, wobei der Anschlag (45) vorzugsweise mit dem Basiselement (7) verbunden ist.

11. Vorrichtung nach einem der vorhergehenden Ansprüche, **dadurch gekennzeichnet, dass** mit einem Basiselement (7) mehrere Beaufschlagungselemente (17) über jeweils zwei Wandungen (3) verbunden sind.

12. Vorrichtung nach einem Ansprüche 1 bis 11, **dadurch gekennzeichnet, dass** zwischen einem Basiselement (7) und einem Beaufschlagungselement (17) mehrere Paare von Wandungen (3) vorgesehen sind, welche mit jeweils einem Endbereich das Basiselement (7) und mit einem anderen Endbereich das Beaufschlagungselement beaufschlagen.

13. Vorrichtung nach Anspruch 11 oder 12, **dadurch gekennzeichnet, dass** das Basiselement (7) ringförmig, vorzugsweise kreisringförmig ausgebildet ist.

14. Vorrichtung nach Anspruch 11 oder 11 und 13, **dadurch gekennzeichnet, dass** die Beaufschlagungselemente (17) innerhalb des Basiselements (7) angeordnet sind und vorzugsweise einen kreisringförmigen Klemmbereich definieren.

15. Vorrichtung nach Anspruch 12 oder 12 und 13, **dadurch gekennzeichnet, dass** das Beaufschlagungselement (17) innerhalb des Basiselements (7) angeordnet und ringförmig, vorzugsweise kreisringförmig und/oder geschlitzt, ausgebildet ist.

16. Vorrichtung nach einem der Ansprüche 11 bis 15, **dadurch gekennzeichnet, dass** die Paare von Wandungen (3) in jeweils einer Ebene liegen und eng benachbart sind

17. Vorrichtung nach Anspruch 16, **dadurch gekennzeichnet, dass** die Paare von Wandungen (3) durch zwei Wandungselemente gebildet sind, welche als ringförmige, vorzugsweise radial geschlitzte Platten ausgebildet sind und dass zumindest in den Wandungsbereichen zwischen den Schlitzen die Biegebereiche (3a) gebildet sind.

18. Vorrichtung nach Anspruch 17, **dadurch gekennzeichnet, dass** an den Endbereichen der Wandungen (3) jeweils ein Befestigungsbereich (13) vorgesehen ist, welcher mit dem jeweiligen Beaufschlagungselement (17) verbunden ist oder dieses bildet, und wobei der zusammenhängende Bereich der Wandungselemente einen weiteren Befestigungsbereich (5) bildet, der mit dem Basiselement (7) verbunden ist oder dieses bildet.

19. Vorrichtung nach einem der Ansprüche 13 bis 18, **dadurch gekennzeichnet, dass** zwischen den Wandungselementen zwei ringförmige Dichtelemente (49) vorgesehen sind, die einen gemeinsamen Druckraum für die Paare von Wandungen (3) bilden, wobei die Dichtelemente (49) vorzugsweise dichtend zwischen den Befestigungsbereichen (5, 13) der Wandungselemente gehalten sind.

20. Vorrichtung nach einem der Ansprüche 11 bis 18, **dadurch gekennzeichnet, dass** zwischen den Biegebereichen (3a) der Wandungselemente ein Schlauchringelement (47) vorgesehen ist, welches einen gemeinsamen Druckraum für die Paare von Wandungen (3) bilden.

21. Vorrichtung nach einem der Ansprüche 11 bis 20, **dadurch gekennzeichnet, dass** ein Wandungselement aus einem Paket mehrerer, vorzugsweise identisch ausgebildeter Teilwandungselemente besteht.

22. Vorrichtung nach einem der Ansprüche 11 bis 21, **dadurch gekennzeichnet, dass** das Basiselement (7) als im Wesentlichen geschlossenes, vorzugsweise zweiteiliges Gehäuse ausgebildet ist, in welchem die Wandungselemente aufgenommen sind, wobei vorzugsweise Innenwandungen des Gehäuses eine maximale Biegung der Biegebereiche der Wandungen begrenzen.

23. Vorrichtung nach Anspruch 22, **dadurch gekennzeichnet, dass** auch das ringförmige, vorzugsweise geschlitzte Beaufschlagungselement (17) im Gehäuse gehalten und hinsichtlich seiner radialen Dimensionsänderungen geführt ist.

## Claims

1. Gripping and/or braking device
(a) having a base element (7) which is firmly connected, via at least two adjacent walls (3), to an impinging element (17) which can be moved, in the direction of said base element (7), away from or towards the latter and via which the gripping and/or braking forces generated can be transmitted to an object (39);
(b) wherein the at least two adjacent walls (3) define a substantially sealed pressure space which can be acted upon by positive or negative pressure;
(c) wherein the at least two walls (3) each have a bending region (3a) which is constructed so as to be so tension-proof and yet so elastically flexible that the bending regions (3a) form a resilient element between the base element (7) and the impinging element (17);
**characterised in that**
(d) when the gripping and/or braking device (1) is in the pressure-less installed condition, the at least two walls (3) exert the gripping and/or braking force on the object (39) via the impinging element (17); and
(e) that the at least two walls (3) and their bending regions (3a) are so constructed and dimensioned that,
(i) when the pressure space is acted upon by positive pressure as a consequence of an increase in the curvature of the bending regions (3a), a reduction in the gripping and/or braking forces which can be transmitted to the object (39) via the impinging element (17) is brought about or a movement of said impinging element (17) in the direction towards the base element (7) takes place, and that, when the pressure space is acted upon by negative pressure as a consequence of a reduction in the curvature of the bending regions (3a), an increase in the gripping and/or braking forces which can be transmitted to the object (39) via the impinging element (17) is brought about or a movement of said impinging element (17) in the direction away from the base element (7) takes place, or
(ii) that, conversely, when the pressure space is acted upon by negative pressure as a consequence of an increase in the curvature of the bending regions (3a), a reduction in the gripping and/or braking forces which can be transmitted to the object (39) via the impinging element (17) is brought about or a movement of said impinging element (17) in the direction towards the base element (7) takes place, and that, when the pressure space is acted upon by positive pressure as a consequence of a reduction in the curvature of the bending regions (3a), an increase in the gripping and/or braking forces which can be transmitted to the object (39) via the impinging element (17) is brought about or a movement of said impinging element (17) in the direction away from the base element (7) takes place.

2. Gripping and/or braking device
(a) having a base element (7) and an impinging element (17) which can be moved, in the direction of said base element (7), away from or towards the latter and via which the gripping and/or braking forces generated can be transmitted to an object (39), and also at least two adjacent walls (3) which act, by means of one end region in each case, upon said base element (7) and said impinging element (17);
(b) wherein the at least two adjacent walls (3) define a substantially sealed pressure space which can be acted upon by positive or negative pressure;
(c) wherein the at least two walls (3) each have a bending region (3a) which is constructed so as to be so tension-proof and yet so elastically flexible that the bending regions (3a) form a resilient element between the base element (7) and the impinging element (17);
**characterised in that**
(d) when the gripping and/or braking device (1) is in the pressure-less installed condition, the at least two walls (3) exert the gripping and/or braking force on the object (39) via the impinging element (17); and
(e) that the at least two walls (3) and their bending regions (3a) are so constructed and dimensioned that,
(i) when the pressure space is acted upon by positive pressure as a consequence of an increase in the curvature of the bending regions (3a), a reduction in the gripping and/or braking forces which can be transmitted to the object (39) via the impinging element (17) is brought about or a movement of said impinging element (17) in the direction towards the base element (7) takes place, and that, when the pressure space is acted upon by negative pressure as a consequence of a reduction in the curvature of the bending regions (3a), an increase in the gripping and/or braking forces which can be transmitted to the object (39) via the impinging element (17) is brought about or a movement of said impinging element (17) in the direction away from the base element (7) takes place, or
(ii) that, conversely, when the pressure space is acted upon by negative pressure as a consequence of an increase in the curvature of the bending regions (3a), a reduction in the gripping and/or braking forces which can be transmitted to the object (39) via the impinging element (17) is brought about or a movement of said impinging element (17) in the direction towards the base element (7) takes place, and that, when the pressure space is acted upon by positive pressure as a consequence of a reduction in the curvature of the bending regions (3a), an increase in the gripping and/or braking forces which can be transmitted to the object (39) via the impinging element (17) is brought about or a movement of said impinging element (17) in the direction away from the base element (7) takes place.

3. Device according to one of the preceding claims,
**characterised in that**, in the pressure-less condition, the bending regions (3a) extend substantially parallel and are preferably at a slight distance which lies in the range from 0.1 mm to 10 mm, and preferably from 1 mm to 5 mm.

4. Device according to one of the preceding claims,
**characterised in that** the walls (3) are constructed as separate parts and have a fastening region (5) by means of which said walls (3) are connected, preferably in a pressure-tight manner, to the base element (7), or that the fastening regions (5) are so designed that they form the base part (7) after being connected to one another, preferably in a pressure-tight manner.

5. Device according to Claim 4,
**characterised in that**, in the region of the base element (7), the walls (3) each have a fastening region (15) which is angled at right angles, and that the fastening regions (5) are connected, preferably in a pressure-tight manner, to a base element (7) which extends substantially transversely to the bending regions (3a) and preferably comprises a holding plate.

6. Device according to one of the preceding claims,
**characterised in that** the walls (3) are constructed as separate parts and have a fastening region (13) by means of which said walls (3) are connected, preferably in a pressure-tight manner, to the impinging element (17), or that the fastening regions (13) are so designed that they form the impinging element (17) after being connected to one another, preferably in a pressure-tight manner.

7. Device according to one of the preceding claims,
**characterised in that** the pressure space is sealed, at the lateral regions of the walls (3), by means of lateral sealing elements (23) which adjoin them in a flush manner and which preferably consist of plastic or rubber.

8. Device according to one of Claims 4 to 7,
**characterised in that** a spacing and/or sealing element (19, 43) is inserted, in the region of the base element (7) and/or of the impinging element (17), between the walls (3) which are constructed as separate parts.

9. Device according to one of Claims 7 or 8,
**characterised in that** a holding arm (25, 27) for the lateral sealing element (23) in question extends, starting from the base element (7) or impinging element (17), in the direction of the impinging element (17) or the base element (7), said lateral sealing element (23) preferably being disposed between the lateral end faces of the walls (3) and the holding arm (25, 27).

10. Device according to one of the preceding claims,
**characterised in that** the path of the bending movement of the bending regions (3a) of the walls (3) is limited, when they are acted upon by pressure, by a mechanical stop (45), said stop (45) preferably being connected to the base element (7).

11. Device according to one of the preceding claims,
**characterised in that** a number of impinging elements (17) are connected to one base element (7) via two walls (3) in each case.

12. Device according to one of Claims 1 to 11,
**characterised in that** there are provided, between a base element (7) and an impinging element (17), a number of pairs of walls (3) which act, by means of one end region in each case, upon the base element (7) and, by means of another end region, upon the impinging element.

13. Device according to Claim 11 or 12,
**characterised in that** the base element (7) is constructed in the shape of a ring, preferably a circular ring.

14. Device according to Claim 11 or 11 and 13,
**characterised in that** the impinging elements (17) are disposed inside the base element (7) and preferably define a gripping region in the shape of a circular ring.

15. Device according to Claim 12 or 12 and 13,
**characterised in that** the impinging element (17) is disposed inside the base element (7) and is constructed in the shape of a ring, preferably a circular ring, and/or in a slit manner.

16. Device according to one of Claims 11 to 15,
**characterised in that** the pairs of walls (3) lie in one plane in each case and are closely adjacent.

17. Device according to Claim 16,
**characterised in that** the pairs of walls (3) are formed by two wall elements which are constructed in the form of plates which are ring-shaped and are preferably radially slit, and that the bending regions (3a) are formed at least in the wall regions between the slits.

18. Device according to Claim 17,
**characterised in that** there is provided, at the end regions of the walls (3) in each case, a fastening region (13) which is connected to the particular impinging element (17) or forms the latter, and wherein the continuous region of the wall elements forms another fastening region (5) which is connected to the base element (7) or forms the latter.

19. Device according to one of Claims 13 to 18,
**characterised in that** there are provided, between the wall elements, two ring-shaped sealing elements (49) which form a common pressure space for the pairs of walls (3), said sealing elements (49) being held, preferably in a sealing manner, between the fastening regions (5, 13) of the wall elements.

20. Device according to one of Claims 11 to 18,
**characterised in that** there is provided, between the bending regions (3a) of the wall elements, a tubular ring element (47) which forms a common pressure space for the pairs of walls (3).

21. Device according to one of Claims 11 to 20,
**characterised in that** a wall element consists of a set of a number of partial wall elements which are preferably of identical construction.

22. Device according to one of Claims 11 to 21,
**characterised in that** the base element (7) is constructed in the form of a substantially closed, preferably bipartite housing in which the wall elements are received, inner walls of said housing preferably limiting the maximum flexure of the bending regions of the walls.

23. Device according to Claim 22,
**characterised in that** the ring-shaped, preferably slit impinging element (17) is also held in the housing and guided in respect of its radial changes in dimension.

## Revendications

1. Dispositif de serrage et/ou de freinage
(a) comportant un élément de base (7) lequel est relié de manière solidaire, par l'intermédiaire d'au moins deux parois (3) adjacentes, à un élément d'impact (17), devant être déplacé dans le sens opposé à l'élément de base (7) ou vers l'élément de base, au moyen duquel les forces de serrage et/ou de freinage produites sont transmissibles à un objet (39),
(b) dans lequel les au moins deux parois (3) adjacentes définissent une chambre de pression, rendue sensiblement étanche et apte à être alimentée en surpression ou en dépression,
(c) les au moins deux parois (3) présentant chacune une zone de flexion (3a) réalisée de manière résistante à la traction et cependant élastiquement flexible de telle façon que les zones de flexion (3a) forment un élément élastique entre l'élément de base (7) et l'élément d'impact (17),
**caractérisé en ce que**
(d) les au moins deux parois (3), à l'état de montage sans pression du dispositif de serrage et/ou de freinage (1), exercent l'effort de serrage et/ou de freinage sur l'objet (39) via l'élément d'impact (17), et
(e) les au moins deux parois (3) et leurs zones de flexion (3a) sont réalisées et dimensionnées de telle façon que
(i) en cas d'impact de la chambre de pression en surpression par suite d'une augmentation de la courbure des zones de flexion (3a) s'opère une réduction des forces de serrage et/ou de freinage transmissibles à l'objet (39) via l'élément d'impact (17) ou bien un mouvement de l'élément d'impact (17) en direction de l'élément de base (7) et, en cas d'impact de la chambre de pression en dépression par suite d'une réduction de la courbure des zones de flexion (3a) s'opère une augmentation des forces de serrage et/ou de freinage transmissibles à l'objet (39) via l'élément d'impact (17) ou bien un mouvement de l'élément d'impact (17) en direction opposée à l'élément de base (7), ou
(ii) que, à l'inverse, en cas d'impact de la chambre de pression en dépression par suite d'une augmentation de la courbure des zones de flexion (3a) s'opère une réduction des forces de serrage et/ou de freinage transmissibles à l'objet (39) via l'élément d'impact (17) ou bien un mouvement de l'élément d'impact (17) en direction de l'élément de base (7) et, en cas d'impact de la chambre de pression en surpression par suite d'une réduction de la courbure des zones de flexion (3a) s'opère une augmentation des forces de serrage et/ou de freinage transmissibles à l'objet (39) via l'élément d'impact (17) ou bien un mouvement de l'élément d'impact (17) en direction opposée à l'élément de base (7).

2. Dispositif de serrage et/ou de freinage
(a) comportant un élément de base (7) et un élément d'impact (17), devant être déplacé dans le sens opposé à l'élément de base (7) ou vers l'élément de base, par l'intermédiaire duquel les forces de serrage et/ou de freinage produites sont transmissibles à un objet (39) ainsi qu'au moins deux parois (3) adjacentes, qui alimentent, chacune par une zone terminale, l'élément de base (7) et l'élément d'impact (17),
(b) les au moins deux parois (3) adjacentes définissant une chambre de pression, rendue sensiblement étanche et apte à être alimentée en pression ou en dépression,
(c) les au moins deux parois (3) présentant chacune une zone de flexion (3a) réalisée de manière résistante à la traction et cependant élastiquement flexible de telle façon que les zones de flexion (3a) forment un élément élastique entre l'élément de base (7) et l'élément d'impact (17),
**caractérisé en ce que**
(d) les au moins deux parois (3), à l'état de montage sans pression du dispositif de serrage et/ou de freinage (1), exercent l'effort de serrage et/ou de freinage sur l'objet (39) via l'élément d'impact (17), et
(e) les au moins deux parois (3) et leurs zones de flexion (3a) étant réalisées et dimensionnées de telle façon que
(i) en cas d'impact de la chambre de pression en surpression par suite d'une augmentation de la courbure des zones de flexion (3a) s'opère une réduction des forces de serrage et/ou de freinage transmissibles à l'objet (39) via l'élément d'impact (17) ou bien un mouvement de l'élément d'impact (17) en direction de l'élément de base (7) et, en cas d'impact de la chambre de pression en dépression par suite d'une réduction de la courbure des zones de flexion (3a) s'opère une réduction des forces de serrage et/ou de freinage transmissibles à l'objet (39) via l'élément d'impact (17) ou bien un mouvement de l'élément d'impact (17) en direction opposée à l'élément de base (7), ou
(ii) que, à l'inverse, en cas d'impact de la chambre de pression en dépression par suite d'une augmentation de la courbure des zones de flexion (3a) s'opère une réduction des forces de serrage et/ou de freinage transmissibles à l'objet (39) via l'élément d'impact (17) ou bien un mouvement de l'élément d'impact (17) en direction de l'élément de base (7) et, en cas d'impact de la chambre de pression en surpression par suite d'une réduction de la courbure des zones de flexion (3a) s'opère une augmentation des forces de serrage et/ou de freinage transmissibles à l'objet (39) via l'élément d'impact (17) ou bien un mouvement de l'élément d'impact (17) en direction opposée à l'élément de base (7).

3. Dispositif selon l'une des revendications précédentes, **caractérisé en ce que** les zones de flexion (3a) à l'état sans pression sont essentiellement parallèles et, de préférence, présentent un faible écartement, qui se situe dans la plage de 0,1 mm à 10 mm, de préférence de 1 mm à 5 mm.

4. Dispositif selon l'une des revendications précédentes, **caractérisé en ce que** les parois (3) sont réalisées en tant qu'éléments séparés et présentent une zone de fixation (5) permettant de relier les parois (3), de préférence de manière étanche à la pression, à l'élément de base (7), ou **en ce que** les zones de fixation (5) sont configurées de manière à former, après la liaison de préférence étanche à la pression, l'élément de base (7).

5. Dispositif selon la revendication 4, **caractérisé en ce que** les parois (3) dans la zone de l'élément de base (7) présentent chacune une zone de fixation (15) à angles droits et que **en ce que** les zones de fixation (5) sont reliées, de préférence de manière étanche à la pression, à un élément de base (7) s'étendant de manière sensiblement transversale aux zones de flexion (3a), lequel comporte de préférence une plaque d'arrêt.

6. Dispositif selon l'une des revendications précédentes, **caractérisé en ce que** les parois (3) sont réalisées en tant qu'éléments séparés et présentent une zone de fixation (13) permettant de relier les parois (3) à l'élément d'impact (17), de préférence de manière étanche à la pression, ou **en ce que** les zones de fixation (13) sont configurées de manière à former, après la liaison de préférence étanche à la pression, l'élément d'impact (17).

7. Dispositif selon l'une des revendications précédentes, **caractérisé en ce que** la chambre de pression est rendue étanche sur les zones latérales des parois (3) au moyen d'éléments d'étanchéité latéraux (23) s'y raccordant bout à bout, lesquels sont, de préférence, en matière plastique ou en caoutchouc.

8. Dispositif selon l'une des revendications 4 à 7, **caractérisé en ce que**, entre les parois (3) réalisées en tant qu'éléments séparés, dans la zone de l'élément de base (7) et/ou de l'élément d'impact (17), est inséré un élément d'écartement et/ou d'étanchéité (19, 43).

9. Dispositif selon l'une des revendications 7 et 8, **caractérisé en ce que**, à partir de l'élément de base (7) ou de l'élément d'impact (17), s'étend un bras support (25, 27) de l'élément d'étanchéité latéral (23) concerné en direction de l'élément d'impact (17) ou de l'élément de base (7), l'élément d'étanchéité latéral (23) étant disposé, de préférence, entre les faces avant latérales des parois (3) et le bras support (25, 27).

10. Dispositif selon l'une des revendications précédentes, **caractérisé en ce que** la course du mouvement de flexion des zones de flexion (3a) est limitée aux parois (3), en cas d'impact en pression, par une butée mécanique (45), la butée (45) étant reliée, de préférence, à l'élément de base (7).

11. Dispositif selon l'une des revendications précédentes, **caractérisé en ce que** plusieurs éléments d'impact (17) sont reliés à un élément de base (7) via respectivement deux parois (3).

12. Dispositif selon l'une des revendications précédentes, **caractérisé en ce que**, entre un élément de base (7) et un élément d'impact (17), sont prévues plusieurs paires de parois (3) qui, respectivement, alimentent l'élément de base (7) par une première zone terminale et l'élément d'impact par une autre zone terminale.

13. Dispositif selon la revendication 11 ou 12, **caractérisé en ce que** l'élément de base (7) est de forme annulaire, de préférence réalisé en forme d'anneau de cercle.

14. Dispositif selon la revendication 11 ou 11 et 13, **caractérisé en ce que** les éléments d'impact (17) sont disposés à l'intérieur de l'élément de base (7) et définissent, de préférence, une zone de serrage en forme d'anneau de cercle.

15. Dispositif selon la revendication 12 ou 12 et 13, **caractérisé en ce que** l'élément d'impact (17) est disposé à l'intérieur de l'élément de base (7) et est de forme annulaire, de préférence en forme d'anneau de cercle et/ou fendu.

16. Dispositif selon l'une des revendications 11 à 15, **caractérisé en ce que** les paires de parois (3) sont situées chacune sur un plan et étroitement adjacentes.

17. Dispositif selon la revendication 16, **caractérisé en ce que** les paires de parois (3) sont formées par deux éléments de parois, réalisées en tant que plaques de forme annulaire, de préférence fendues radialement, et **en ce que** les zones de flexion (3a) sont formées au moins dans les zones des parois entre les fentes.

18. Dispositif selon la revendication 17, **caractérisé en ce que** sur chacune des zones terminales des parois (3) est prévue une zone de fixation (13) reliée à l'élément d'impact (17) correspondant ou formant celui-ci, et la zone contiguë des éléments de paroi formant une autre zone de fixation (5) qui est reliée à l'élément de base (7) ou forme celui-ci.

19. Dispositif selon l'une des revendications 13 à 18, **caractérisé en ce que** sont prévus, entre les éléments de paroi, deux éléments d'étanchéité annulaires (49) qui forment une chambre de pression commune pour les paires de parois (3), les éléments d'étanchéité (49) étant maintenus, de préférence, de manière étanche entre les zones de fixation (5, 13) des éléments de paroi.

20. Dispositif selon l'une des revendications 11 à 18, **caractérisé en ce que**, entre les zones de flexion (3a) des éléments de paroi, est prévu un élément d'anneau flexible (47) qui définit une chambre de pression commune pour les paires de parois (3).

21. Dispositif selon l'une des revendications 11 à 20, **caractérisé en ce qu'**un élément de paroi est constitué d'un paquet de plusieurs éléments de paroi partiels réalisés, de préférence, de manière identique.

22. Dispositif selon l'une des revendications 11 à 21, **caractérisé en ce que** l'élément de base (7) est réalisé sous forme de carter sensiblement fermé, de préférence en deux parties, qui reçoit les éléments de paroi, de préférence des parois internes du carter limitant une flexion maximale des zones de flexion des parois.

23. Dispositif selon la revendication 22, **caractérisé en ce que** l'élément d'impact (17) annulaire, de préférence fendu, est également maintenu dans le carter et guidé par rapport à ses changements de dimensions radiales.
